(19) **Europäisches Patentamt**
**European Patent Office**
**Office européen des brevets**

(11) **EP 3 912 094 B1**

(12) **EUROPEAN PATENT SPECIFICATION**

(45) Date of publication and mention
of the grant of the patent:
**25.03.2026 Bulletin 2026/13**

(21) Application number: **19701100.0**

(22) Date of filing: **18.01.2019**

(51) International Patent Classification (IPC):
**G06N 3/045** (2023.01)    **G06N 3/086** (2023.01)
**G06N 3/063** (2023.01)    **G06N 3/0455** (2023.01)
**G06N 3/0495** (2023.01)    **G06N 3/0499** (2023.01)
**G06N 3/082** (2023.01)    **G06N 3/09** (2023.01)
**G06N 3/048** (2023.01)

(52) Cooperative Patent Classification (CPC):
**G06N 3/063; G06N 3/0455; G06N 3/0495;**
**G06N 3/0499; G06N 3/082; G06N 3/086;**
**G06N 3/09;** G06N 3/048

(86) International application number:
**PCT/EP2019/051282**

(87) International publication number:
**WO 2020/147971 (23.07.2020 Gazette 2020/30)**

(54) **TRAINING IN COMMUNICATION SYSTEMS**

TRAINING IN KOMMUNIKATIONSSYSTEMEN

APPRENTISSAGE DANS DES SYSTÈMES DE COMMUNICATION

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**24.11.2021 Bulletin 2021/47**

(73) Proprietor: **Nokia Technologies Oy**
**02610 Espoo (FI)**

(72) Inventors:
• **AIT AOUDIA, Faycal**
**92210 Saint-Cloud (FR)**
• **HOYDIS, Jakob**
**75014 Paris (FR)**

(74) Representative: **Nokia EPO representatives**
**Nokia Technologies Oy**
**Karakaari 7**
**02610 Espoo (FI)**

(56) References cited:
**US-A1- 2018 367 192    US-A1- 2018 367 192**

• **LANDER SEAN ET AL: "EvoAE -- A New Evolutionary Method for Training Autoencoders for Deep Learning Networks", 2015 IEEE 39TH ANNUAL COMPUTER SOFTWARE AND APPLICATIONS CONFERENCE, IEEE, vol. 2, 1 July 2015 (2015-07-01), pages 790 - 795, XP033207396, DOI: 10.1109/COMPSAC.2015.63**
• **O'SHEA TIMOTHY ET AL: "An Introduction to Deep Learning for the Physical Layer", IEEE TRANSACTIONS ON COGNITIVE COMMUNICATIONS AND NETWORKING, IEEE, USA, vol. 3, no. 4, 1 December 2017 (2017-12-01), pages 563 - 575, XP011675252, DOI: 10.1109/ TCCN.2017.2758370**
• **SEBASTIAN DORNER ET AL: "Deep Learning Based Communication Over the Air", 11 July 2017 (2017-07-11), pages 1 - 11, XP055487519, Retrieved from the Internet <URL:https://arxiv. org/pdf/1707.03384.pdf> [retrieved on 20180625], DOI: 10.1109/JSTSP.2017.2784180**
• **TIMOTHY J O'SHEA ET AL: "Deep Learning Based MIMO Communications", ARXIV.ORG, CORNELL UNIVERSITY LIBRARY, 201 OLIN LIBRARY CORNELL UNIVERSITY ITHACA, NY 14853, 25 July 2017 (2017-07-25), XP080779352**

**(Cont. next page)**

- **LANDER SEAN ET AL: "EvoAE -- A New Evolutionary Method for Training Autoencoders for Deep Learning Networks", 2015 IEEE 39TH ANNUAL COMPUTER SOFTWARE AND APPLICATIONS CONFERENCE, IEEE, vol. 2, 1 July 2015 (2015-07-01), pages 790 - 795, XP033207396, DOI: 10.1109/COMPSAC.2015.63**
- **O'SHEA TIMOTHY ET AL: "An Introduction to Deep Learning for the Physical Layer", IEEE TRANSACTIONS ON COGNITIVE COMMUNICATIONS AND NETWORKING, IEEE, USA, vol. 3, no. 4, 1 December 2017 (2017-12-01), pages 563 - 575, XP011675252, DOI: 10.1109/ TCCN.2017.2758370**
- **SEBASTIAN DORNER ET AL: "Deep Learning Based Communication Over the Air", 11 July 2017 (2017-07-11), pages 1 - 11, XP055487519, Retrieved from the Internet <URL:https://arxiv. org/pdf/1707.03384.pdf> [retrieved on 20180625], DOI: 10.1109/JSTSP.2017.2784180**
- **TIMOTHY J O'SHEA ET AL: "Deep Learning Based MIMO Communications", ARXIV.ORG, CORNELL UNIVERSITY LIBRARY, 201 OLIN LIBRARY CORNELL UNIVERSITY ITHACA, NY 14853, 25 July 2017 (2017-07-25), XP080779352**

## Description

### Field

The present specification relates to training in communication systems.

### Background

A simple communications system includes a transmitter, a transmission channel, and a receiver. The design of such communications systems may involve the separate design and optimisation of each part of the system. An alternative approach is to consider the entire communication system as a single system and to seek to optimise the entire system. For example, Dörner et al., 11 July 2017, "Deep Learning-based Communication Over the Air" discloses the idea of deep learning communication systems. Lander et al., 01 July 2015, "EvoAE - A New Evolutionary Method for Training Autoencoders for Deep Learning Networks" discloses an evolutionary method for training autoencoders. O'Shea et al., 01 December 2017, "An Introduction to Deep Learning for the Physical Layer" discloses an autoencoder for implementing a communications system, where the transmitter and the receiver of the communications system are respectively implemented as the encoder and the decoder neural networks of the autoencoder.

Although some attempts have been made in the prior art, there remains scope for further developments in this area.

### Summary

The invention is set out in independent claims 1, 11 and 12. Preferred aspects of the invention are set out in the dependent claims.

### Brief description of the drawings

Example embodiments will now be described, by way of non-limiting examples, with reference to the following schematic drawings, in which:

FIG. 1 is a block diagram of a communication system in accordance with an example embodiment;
FIG. 2 is a flow chart showing an algorithm in accordance with an example embodiment;
FIG. 3 is a flow chart showing an algorithm in accordance with an example embodiment;
FIG. 4 is a block diagram of a system in accordance with an example embodiment;
FIG. 5 is a flow chart showing an algorithm in accordance with an example embodiment;
FIG. 6 is a block diagram of a components of a system in accordance with an example embodiment; and
FIGS. 7A and 7B show tangible media, respectively a removable memory unit and a compact disc (CD) storing computer-readable code which when run by a computer perform operations according to embodiments.

### Detailed description

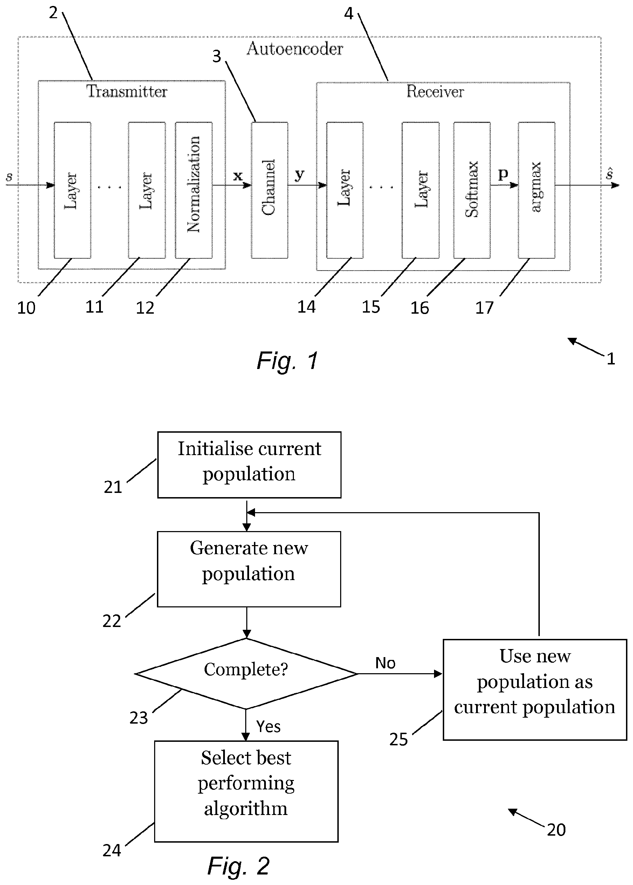

FIG. 1 is a block diagram of an example communication system, indicated generally by the reference numeral 1, in which example embodiments may be implemented. The system 1 includes a transmitter 2, a channel 3 and a receiver 4. Viewed at a system level, the system 1 converts an input symbol ($s$) (also called a message) received at the input to the transmitter 2 into an output symbol ($\hat{s}$) at the output of the receiver 4.

The transmitter 2 implements a transmitter algorithm. Similarly, the receiver 4 implements a receiver algorithm. As described in detail below, the algorithms of the transmitter 2 and the receiver 4 are trained in order to optimise the performance of the system 1 as a whole.

As discussed further below, the transmitter 2 may include a dense layer of one or more units 10, 11 (e.g. including one or more neural networks) and a normalization module 12. The dense layers 10, 11 may include an embedding module. The modules within the transmitter 2 are provided by way of example and modifications are possible.

Similarly, the receiver 4 may include a dense layer of one or more units 14, 15 (e.g. including one or more neural networks), a softmax module 16 and an arg max module 17. As described further below, the output of the softmax module is a probability vector that is provided to the input of an arg max module 17. The modules within the receiver 4 are provided by way of example and modifications are possible.

The system 1 therefore provides an autoencoder implementing an end-to-end communication system. The autoencoder can be trained with respect to an arbitrary loss function that is relevant for a certain performance metric, such as block error rate (BLER). (The terms 'autoencoder' and 'communication system' are both used below to describe the system 1.)

One obstacle to practical hardware implementation of the communication system (or autoencoder) 1 is the high memory requirement and computational complexity of the involved neural networks. Hardware acceleration may be provided to achieve reasonable inference time. However, graphical processing units (GPUs) that can be used to accelerate neural network evaluations come at a high monetary and energy cost that may not be viable in many communication systems.

By way of example, neural networks (or some other parametric algorithm) may be trained and exploited on computationally powerful platforms with graphic processing units (GPU) acceleration, supporting high precision floating point arithmetic (e.g. 32-bit or 64-bit floating point arithmetic). Such hardware may not be available for some communication systems. Accordingly, the neural networks implementing the transmitter 2 and the receiver 4 of the system 1 may be compressed to meet practical constraints. This may be achieved by using a more compact representation of neural network parameters, at the cost of reduced precision. For example, as described further below, compression of weights and/or biases of the neural networks may be achieved through quantization, such that the weights are forced to take values within a codebook with a finite number of entries (e.g. at a lower precision that that provided by a training module). In extreme cases, each weight may take a binary value (e.g. either -1 or +1).

One method for quantizing the weights of a neural network (or some other algorithm) is to use K-bit fixed point arithmetic, instead of using a floating point arithmetic (such as 32-bits or 64-bits floating point arithmetic), with K typically being smaller than 32. Combining the principles of quantization and the use of fixed point arithmetic not only results in using fewer bits to represent the weights of the neural networks described herein, but can also reduce the complexity of arithmetic operators.

Using K-bits fixed point arithmetic, with $K_E$ bits used for the integer part and $K_F$ bits used for the fractional part (such that $K_E + K_F = K$), a weight w is represented by:

$$w = \sum_{i=0}^{K_E-1} w_{e,i} 2^i + \sum_{j=1}^{K_F} w_{f,j} 2^{-j}$$

where $w_{e,i}$ and $w_{f,j}$ take values in {0,1}. The number of bits K, as well as the sizes of the integer and fractional parts $K_E$ and $K_F$ are fixed. The scalar w is represented by a K+1 bit word $(w_s, w_{e,0}, ..., w_{e,K_E-1}, w_{f,1}, ..., w_{f,K_F})$, where $w_s$ is a sign bit (i.e. a bit indicating the sign of the weight).

In one embodiment, the transmitter 2 seeks to communicate one out of M possible messages $s \in \mathcal{M} = \{1, 2, ..., M\}$ to the receiver 4. To this end, the transmitter 2 sends a complex-valued vector representation $\mathbf{x} = \mathbf{x}(s) \in \mathbb{C}^n$ of the message through the channel 3. Generally, the transmitter hardware imposes constraints on x, e.g. an energy constraint $\|x\|_2^2 \le n$, an amplitude constraint $|x_i| \le 1 \forall i$, or an average power constraint $\mathbb{E}[|x_i|^2] \le 1 \forall i$. The channel 3 is described by the conditional probability density function (pdf) $p(\mathbf{y}|\mathbf{x})$, where $\mathbf{y} \in \mathbb{C}^n$ denotes the received signal. Upon reception of **y**, the receiver produces the estimate ŝ of the transmitted message s.

The message index s may be fed into an embedding module, embedding: $\mathbb{M} \mapsto \mathbb{R}^{n_{emb}}$, that transforms s into an $n_{emb}$-dimensional real-valued vector.

The embedding module may be followed by several dense neural network (NN) layers 10, 11 with possible different activation functions (such as ReLU, tanh, signmoid, linear etc.). The final layer of the neural network may have has 2n output dimensions and a linear activation function. If no dense layer is used, $n_{emb}$ = 2n.

The output of the dense layers 10, 11 may be converted to a complex-valued vector through the mapping $\mathbb{R}2\mathbb{C} : \mathbb{R}^{2n} \mapsto \mathbb{C}^n$, which could be implemented as $\mathbb{R}2\mathbb{C}(\mathbf{z}) = \mathbf{z}_0^{n-1} + j\mathbf{z}_n^{2n-1}$. (This is not shown and is a purely optional step.)

A normalization is applied by the normalization module 12 that ensures that power, amplitude or other constraints are met. The result of the normalization process is the transmit vector x of the transmitter 2 (where $\mathbf{x} \in \mathbb{R}^{2n}$). As noted above, modifications may be made to the transmitter 2, for example the order of the complex vector generation and the normalization could be reversed.

The transmitter 2 defines the following mapping:

$$TX : \mathcal{M} \mapsto \mathbb{R}^{2n}, \ \mathcal{M} = \{0, ..., M-1\}.$$

In other words, TX maps an integer from the set $\mathcal{M}$ to a 2n-dimensional real-valued vector. One example mapping is described above. Other neural network architectures are possible and the illustration above services just as an example.

As discussed above, the receiver 4 includes a dense layer of one or more units 14, 15 (e.g. including one or more neural networks), a softmax module 16 and an arg max module 17.

If the channel output vector $\mathbf{y} \in \mathbb{C}^n$ is complex-valued, it may be transformed by the receiver 4 into a real-valued vector of 2n dimensions through the mapping $\mathbb{C}2\mathbb{R} : \mathbb{C}^n \mapsto \mathbb{R}^{2n}$, which could be implemented as $\mathbb{C}2\mathbb{R}(\mathbf{z}) = [\mathcal{R}\{\mathbf{z}\}^T, \mathcal{I}\{\mathbf{z}\}^T]^T$. This step is not necessary for real-valued channel outputs $\mathbf{y} \in \mathbb{R}^{2n}$.

The result is fed into the one or more layers 14, 15, which layers may have different activation functions such as ReLU, tanh, sigmoid, linear, etc. The last layer may have M output dimensions to which a softmax activation is applied (by softmax module 16).

This generates the probability vector $\mathbf{p} \in \mathbb{R}^M$, whose ith element $[\mathbf{p}]_i$ can be interpreted as Pr(s = i|$\mathbf{y}$). A hard decision for the message index is obtained as ŝ = arg max($\mathbf{p}$) by arg max module 17.

The transmitter 2 and the receiver 4 are implemented as neural networks having parameter vectors $\theta_T$ and $\theta_R$ respectively. If a differential channel model is available, then the channel model can be used as an intermediate non-trainable layer, such that the entire communication system 1 can be seen as a single neural network with parameters vector $\theta = (\theta_T, \theta_R)$, which defines the mapping:

$$f_{\boldsymbol{\theta}} : \mathcal{M} \mapsto \left\{ \mathbf{p} \in \mathbb{R}^M_+ \middle| \sum_{i=1}^{M} p_i = 1 \right\} \times \mathcal{M}$$

In some arrangements, the autoencoder 1 may be trained in a supervised manner using stochastic gradient descent (SGD). However, the use of stochastic gradient descent is difficult for an autoencoder with quantized weights, which take values in a discrete space.

FIG. 2 is a flow chart showing an algorithm, indicated generally by the reference numeral 20, in accordance with an example embodiment. The algorithm 20 uses principles of evolutionary computation to train an algorithm, such as a neural network (e.g. neural networks having quantized weights) implementing communication systems.

The algorithm 20 starts at operation 21, where a population $\mathcal{P}$ of neural networks implementing end-to-end communication systems (or autoencoders) such as the autoencoder 1 are initialised. This can be achieved by generating parameters $\theta_T$ implementing transmitter neural networks and parameters $\theta_R$ implementing receiver neural networks according to some probability distribution over the possible weights values. The operation 21 may generate the parameters randomly from possible quantized weights.

At operation 22, a new population is generated from the initial population. As described further below, generating a new population may include selecting a subset of the initial/current population and generating a new population from the subset. The selection is made according to a metric (such as a loss function). Some example metrics are discussed further below.

With a new population generated, it is determined at operation 23 whether or not the algorithm 20 is complete. If so, the algorithm moves to 24. Otherwise, the algorithm moves to operation 25.

The algorithm 20 is deemed to be complete when a condition is reached; example conditions include a predefined performance level or a defined number of iterations. In one embodiment, the condition is deemed to have been reached when the best performing one (according to some metric) of the population of neural networks generated in the most recent iteration of the operation 22 reaches a predefined performance criterion according to said metric. The skilled person will be aware of other example conditions that could be used in the operation 23.

At operation 25, the new population is used as the current population and the algorithm returns to operation 22, where a new population is generated (using the population generated in the previous iteration of the operation 22 as the starting point).

The operations 22, 23 and 25 are repeated until the algorithm 20 is deemed to be complete. When the algorithm is deemed to be complete, the best performing neural network of the population of neural networks generated in the most recent iteration of the operation 22 is selected (in operation 24) and used as the output of the algorithm 20. In this way, the algorithm 20 can generate a neural network for use, for example, in the autoencoder 1 described above.

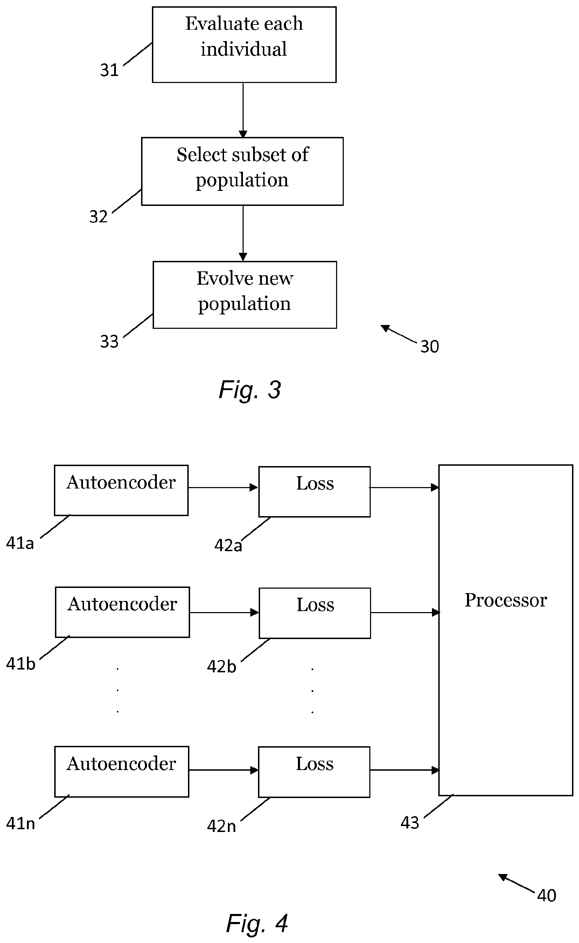

FIG. 3 is a flow chart showing an algorithm, indicated generally by the reference numeral 30, in accordance with an example embodiment. The algorithm 30 is an example implementation of the operation 22 of the algorithm 20 in which a new population is generated from a current population.

The current population comprises a population $\mathcal{P}$ of P neural networks (also referred to as individuals). The algorithm 30 seeks to 'evolve' the population of neural networks such that, on average, the population gets better with respect to a loss function on each iteration of the algorithm 30.

The algorithm 30 starts at operation 31, where some or all of the individuals within the population $\mathcal{P}$ are evaluated according to a metric. For example, each individual within a population may be evaluated with respect of a loss function $L$ to compute a fitness $f_i$ of that population. The fitness may be calculated according to the formula: $f_i = -L(p_i)$ for all $p_i \in \mathcal{P}_i$.

The operation 31 may be implemented, for example, by letting each end-to-end communication system (or autoencoder) transmit a large number of known messages for which the average loss $L(p_i)$ is calculated using the formula $L = \frac{1}{N}\sum_{i=1}^{N} -\log([\boldsymbol{p}_i]_{s_i})$, where $-\log([\boldsymbol{p}_i]_{s_i})$ is the categorical cross entropy between an input message and the output vector $\boldsymbol{p}_i$.

At operation 32, a subset of the neural networks of the current population is selected based on the metric (e.g. the fitness referred to above). The selection may, for example, seek to select the optimum neural networks of the population (such as the best K options) according to said metric. Alternative approaches exist, such as selecting less optimum neural networks (according to the metric) for exploration purposes (e.g. to reduce the likelihood of approaching a local minima), as discussed further below. Moreover, algorithms other than neural networks may be used.

In an example implementation of the operation 32, a subset $\mathcal{T}_t$ is selected, such that $\mathcal{T}_t = \Theta(\mathcal{P}_t, \{f_i\}_i)$, such that $\mathcal{T}_t \subset \mathcal{P}_t$, according to the fitness of the individuals $\{f_i\}_i$.

At operation 33, an updated population of neural networks is generated (or 'evolved') from the subset selected in operation 32. For example, a new population may be generated from the subset $\mathcal{T}_t$ selected in the operation 32 as follows:

$$\mathcal{P}_{t+1} = \Xi(\mathcal{T}_t) \, ,$$

where $\Xi$ is an evolution operator.

The total number of neural networks in the current and updated populations may be the same. In one example, the updated population includes the best performing neural network from the current population (e.g. the neural network most meeting the relevant metric), with all other members of the updated population being generated/evolved from said subset. For example, assume that a population includes 100 neural networks. The 10 best performing neural networks of the population may be used to generate 99 neural networks, with the updated population including the 99 newly generated neural networks and the best performing neural network of the current population.

Thus, on each iteration of the operation 22 of the algorithm 20, a new updated population of neural networks is generated.

The evolution operator $\Xi$ described above can take many forms. For example, if it assumed that all of the neural networks of the population share the same architecture, with $W$ trainable weights, then a neural network $p$ can be uniquely represented by a $W$-dimensional real vector $\mathcal{G}(p) \in \mathbb{R}^W$ constructed by vectorization of its trainable weights.

The vector $\mathcal{G}(p)$ may be referred to as a genome of the individual $p$ (using genetic algorithm terminology).

A simple way to generate new individuals is to apply random perturbations to the genomes of selected individuals. Thus, a new individual $p'$ is obtained from another individual $p$ as follows: $p' = \mathcal{G}^{-1}(\mathcal{G}(p) + w)$, where w is a random perturbation and $\mathcal{G}^{-1}$ is the mapping between a vector of weights and its uniquely corresponding neural network. Addition could be taken on a Galois field. Such perturbations of individual genomes can be referred to as mutations (again, using genetic algorithm terminology). It is also possible to perform crossovers, by combining multiple selected individuals to produce a new one.

The weights of the neural networks are quantized, such that said weights can only take values within a codebook having a finite number of entries (as discussed above). The quantized weights may be expressed used fixed point arithmetic, as discussed above.

The evaluation of individuals within a population of neural networks (as described, for example, with respect to the algorithm 30) can be conducted in parallel; for example, by either instantiating a plurality of members of the population on a different physical hardware setup or by simulating the neural networks of the population in software. By way of example, FIG. 4 is a block diagram of a system, indicated generally by the reference numeral 40, in accordance with an example embodiment comprising a plurality of autoencoders 41a, 41b ...41n (which may be hardware implementations of autoencoders or software simulations). Each autoencoder is a transmission system comprising a transmitter, a channel and a receiver (such as the autoencoder 1), that is viewed as a single neural network (or some other algorithm) with parameters vector $\theta$ (where $\theta$ is derived from transmitter and receiver neural network parameters). Thus, each of the autoencoders 41a, 41b...41n is an example of an individual within a population of neural networks.

A loss function module 42a generates a loss function from the first autoencoder 41a.

Similar loss functions modules 42b to 42n generate loss functions for the autoencoders 41b to 41n. The outputs of the loss function modules 42a to 42n are provided to a processor 43, which processor implements the operation 32 by selecting a subset of the population of autoencoders based on the outputs of the loss function modules.

In the embodiments described above, the operation 22 of the algorithm 20 is implemented by considering the fitness of neural networks within a population of neural networks. This is not essential to all embodiments.

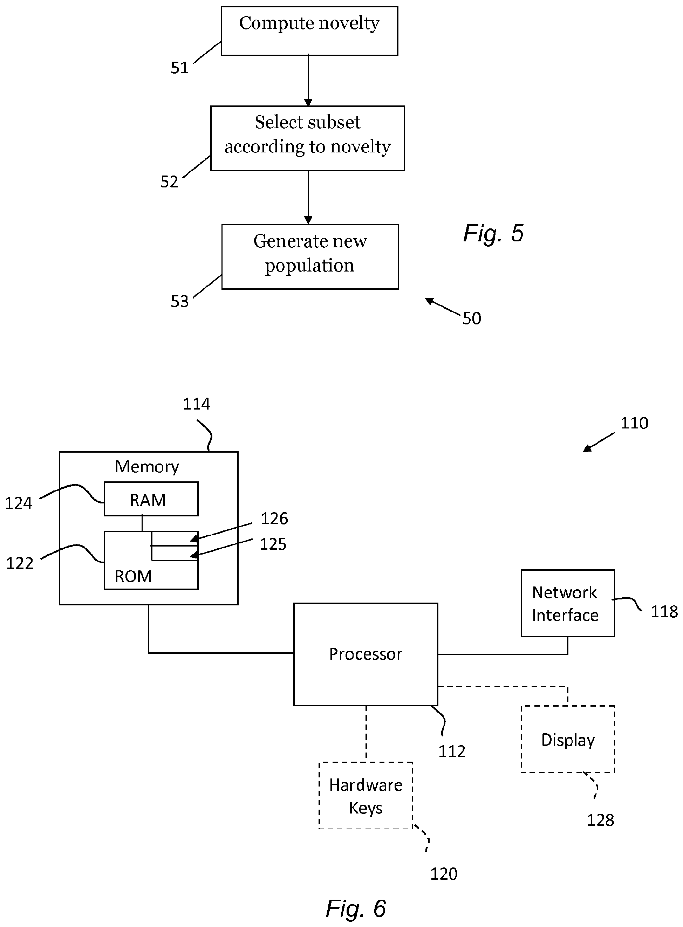

FIG. 5 is a flow chart showing an algorithm, indicated generally by the reference numeral 50, in accordance with an example embodiment. The algorithm 50 is an example implementation of the operation 22 in which so-called novelty is considered, instead of fitness. The novelty-based algorithm (which is described in detail below) includes the definition of a 'behaviour characteristic', which measures behaviour of a neural network (or some other algorithm), and a 'behaviour distance', which measures the distance between the behaviours of different neural networks or algorithms. The behaviour may, for example, be computed from the trainable weights, output or performance of the neural networks of a population.

The algorithm 50 starts at operation 51, where the novelty of a population is computed. That population may be the initial population generated in the operation 21 or the new population generated in the previous iteration of the operation 22 of the algorithm 20 described above. We denote by $\Gamma$ the function which measures the novelty of an individual with regards to the current and previous populations. To do so, the defined behaviour characteristics and behaviour distances are used. Thus, for each neural network of a population $\mathcal{P}$, novelty is computed as follows: $n_i = \Gamma(p_i, \mathcal{P}_t, \mathcal{P}_{t-1}, ... \mathcal{P}_0)$ for all $p_i \in \mathcal{P}_t$.

At operation 52, a subset of the population is selected according to novelty. In this way, the behavioural novelty of individuals within a population is rewarded, rather than the fitness of individuals. Although counter-intuitive, this subset selection process has been found to give good results.

In the operation 52, the subset may be defined as $\mathcal{T}_t = \Theta(\mathcal{P}_t, \{n_i\}_i)$, such that $\mathcal{T}_t \subset \mathcal{P}_t$, according to the novelty of the individuals $\{n_i\}_i$.

At operation 53, a new population is selected from the subset selected in the operation 52. The new population may be given by $\mathcal{P}_{t+1} = \Xi(\mathcal{T}_t)$, where $\Xi$ is an evolution operator.

As noted above, the operation 53 may restore the size of the population (e.g. to $P$).

The behaviour characteristics discussed above may be domain specific. In the case of autoencoders implementing end-to-end communication systems (such as the autoencoder 1), the constellation generated by the encoder may be used as a behaviour characteristic. For example, the behaviour characteristic could be the n-by-M matrix, in which the ith column corresponds to the complex value representation of the message i, where $x(i) \in \mathbb{C}^n$. The behaviour distance can therefore be any matrix norm. For example, given two behaviour characteristics $X_1$ and $X_2$, the behaviour distance could be $\|X_1 - X_2\|_F$ (where $\|X\|_F$ is the Frobenius norm of X).

The algorithm 30 described above selects a subset by considering fitness. The algorithm 50 described above selects a subset by considering novelty. It is also possible to combine aspects of the two algorithms, such that the subset is selected by considering aspects of both fitness and novelty. For example, one may generate a new population by keeping both the K-best performing (according to some metric) and the L-most novel individuals and by creating mutations of the K best performing and the L most different individuals.

For completeness, FIG. 6 is a schematic diagram of components of one or more of the modules described previously (e.g. the transmitter or receiver neural networks), which hereafter are referred to generically as processing systems 110. A processing system 110 may have a processor 112, a memory 114 closely coupled to the processor and comprised of a RAM 124 and ROM 122, and, optionally, hardware keys 120 and a display 128. The processing system 110 may comprise one or more network interfaces 118 for connection to a network, e.g. a modem which may be wired or wireless.

The processor 112 is connected to each of the other components in order to control operation thereof.

The memory 114 may comprise a non-volatile memory, a hard disk drive (HDD) or a solid state drive (SSD). The ROM 122 of the memory 114 stores, amongst other things, an operating system 125 and may store software applications 126. The RAM 124 of the memory 114 is used by the processor 112 for the temporary storage of data. The operating system 125 may contain code which, when executed by the processor, implements aspects of the algorithms 20, 30 and 50.

The processor 112 may take any suitable form. For instance, it may be a microcontroller, plural microcontrollers, a processor, or plural processors.

The processing system 110 may be a standalone computer, a server, a console, or a network thereof.

In some embodiments, the processing system 110 may also be associated with external software applications. These may be applications stored on a remote server device and may run partly or exclusively on the remote server device. These applications may be termed cloud-hosted applications. The processing system 110 may be in communication with the remote server device in order to utilize the software application stored there.

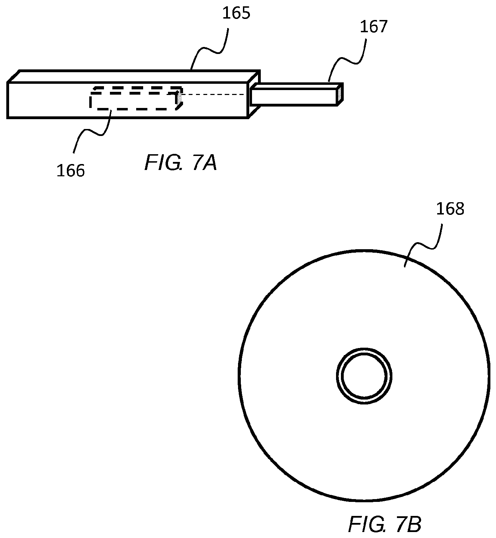

FIGS. 7A and 7B show tangible media, respectively a removable memory unit 165 and a compact disc (CD) 168, storing computer-readable code which when run by a computer may perform methods according to embodiments described above. The removable memory unit 165 may be a memory stick, e.g. a USB memory stick, having internal memory 166 storing the computer-readable code. The memory 166 may be accessed by a computer system via a connector 167. The CD 168 may be a CD-ROM or a DVD or similar. Other forms of tangible storage media may be used.

Embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer.

Reference to, where relevant, "computer-readable storage medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specify circuits ASIC, signal processing devices and other devices. References to computer program, instructions, code etc. should be understood to express software for a programmable processor firmware such as the programmable content of a hardware device as instructions for a processor or configured or configuration settings for a fixed function device, gate array, programmable logic device, etc.

As used in this application, the term "circuitry" refers to all of the following: (a) hardware-only circuit implementations (such as implementations in only analogue and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a server, to perform various functions) and (c) to circuits, such as a microprocessor(s) or a portion of a microprocessor(s), that require software or firmware for operation, even if the software or firmware is not physically present.

If desired, the different functions discussed herein may be performed in a different order and/or concurrently with each other. Furthermore, if desired, one or more of the above-described functions may be optional or may be combined. Similarly, it will also be appreciated that the flow diagram of FIGS. 2, 3 and 5 are examples only and that various operations depicted therein may be omitted, reordered and/or combined.

The example embodiments have generally been described above with reference to populations of neural networks. Moreover, although example embodiments are described in which trainable parameters of the algorithm (e.g. parameters of a neural network) are updated, this is not essential to all embodiments. For example, a population of algorithms may be updated by updating one or more parameters and/or one or more structures of one or more of the algorithms of a population.

**Claims**

1. An apparatus comprising:

   means for evaluating (31) some or all of a current population of algorithms according to a metric, each algorithm of the population implementing a transmission system, wherein the transmission system comprises a transmitter (2), a channel (3) and a receiver (4), wherein the transmitter (2) includes a transmitter algorithm implemented as a transmitter neural network having at least some trainable weights and the receiver (4) includes a receiver algorithm implemented as a receiver neural network having at least some trainable weights, wherein at least some of the weights are quantized weights, wherein said quantized weights can only take values within a codebook having a finite number of entries;
   means for selecting (32) a subset of the algorithms of the current population based on the metric;
   means for generating (33) an updated population of algorithms from said subset by applying random perturbations to the trainable weights of the transmitter and receiver neural networks;
   means for repeating the evaluating, selecting and generating, based on the updated population, until a first condition is reached; and
   means for selecting one algorithm of said updated population of algorithms, when said first condition has been reached.

2. The apparatus as claimed in claim 1, further comprising means for generating an initial population of algorithms and setting said initial population as a first instance of said current population.

3. The apparatus as claimed in any one of claims 1 to 2, wherein the means for evaluating (31) some or all of the current population of algorithms comprises means for computing a fitness of said algorithms, wherein the fitness of said algorithms is computed using a loss function.

4. The apparatus as claimed in any one claims 1 to 3, wherein the means for evaluating (31) some or all of the current population of algorithms comprises means for computing a novelty of said algorithms, wherein the novelty of said algorithms is computed by determining a distance between algorithms of the population.

5. The apparatus as claimed in any one of the preceding claims, wherein the means for selecting (32) the subset of the algorithms of the current population comprises means for selecting one or more optimum algorithms of the population according to said metric.

6. The apparatus as claimed in any one of the preceding claims, wherein the updated population of algorithms includes an algorithm evaluated by the means for evaluating (31) said some or all of the current population of algorithms as most meeting said metric.

7. The apparatus as claimed in any one of the preceding claims, wherein the means for generating (33) an updated population of algorithms from said subset comprises generating one or more new algorithms from the subset of algorithms.

8. The apparatus as claimed in any one of the preceding claims, wherein the first condition is met when a best performing one of said current or updated population of algorithms reaches a predefined performance criterion according to said metric.

9. The apparatus as claimed in any one of the preceding claims, wherein the first condition comprises a defined number of iterations.

10. The apparatus as claimed in any one of the preceding claims, wherein said means for generating (33) an updated population of algorithms from said subset modifies one or more parameters and/or one or more structures of one or more of said subset of algorithms of said current population.

11. A computer-implemented method comprising:

evaluating (31) some or all of a current population of algorithms according to a metric, each algorithm of the population implementing a transmission system, wherein the transmission system comprises a transmitter (2), a channel (3) and a receiver (4), wherein the transmitter (2) includes a transmitter algorithm implemented as a transmitter neural network having at least some trainable weights and the receiver (4) includes a receiver algorithm implemented as a receiver neural network having at least some trainable weights wherein at least some of the weights are quantized weights, wherein said quantized weights can only take values within a codebook having a finite number of entries;
selecting a subset (32) of the algorithms of the current population based on the metric;
generating (33) an updated population of algorithms from said subset by applying random perturbations to the trainable weights of the transmitter and receiver neural networks;
repeating the evaluating, selecting and generating, based on the updated population, until a first condition is reached; and
selecting one algorithm of said updated population of algorithms, when said first condition has been reached.

12. A computer readable medium comprising program instructions stored thereon for performing at least the following:

evaluating (31) some or all of a current population of algorithms according to a metric, each algorithm of the population implementing a transmission system, wherein the transmission system comprises a transmitter (2), a channel (3) and a receiver (4), wherein the transmitter (2) includes a transmitter algorithm implemented as a transmitter neural network having at least some trainable weights and the receiver (4) includes a receiver algorithm implemented as a receiver neural network having at least some trainable weights wherein at least some of the weights are quantized weights, wherein said quantized weights can only take values within a codebook having a finite number of entries;

selecting a subset (32) of the algorithms of the current population based on the metric;

generating (33) an updated population of algorithms from said subset by applying random perturbations to the trainable weights of the transmitter and receiver neural networks;

repeating the evaluating, selecting and generating, based on the updated population, until a first condition is reached; and

selecting one algorithm of said updated population of algorithms, when said first condition has been reached.

**Patentansprüche**

1. Vorrichtung, umfassend:

Mittel zum Bewerten (31) einiger oder aller einer aktuellen Population von Algorithmen gemäß einer Metrik, wobei jeder Algorithmus der Population ein Übertragungssystem implementiert, wobei das Übertragungssystem einen Sender (2), einen Kanal (3) und einen Empfänger (4) umfasst, wobei der Sender (2) einen Senderalgorithmus umfasst, der als ein Sender-Neuronalnetz mit zumindest einigen trainierbaren Gewichten implementiert ist, und der Empfänger (4) einen Empfängeralgorithmus umfasst, der als ein Empfänger-Neuronalnetz mit zumindest einigen trainierbaren Gewichten implementiert ist, wobei zumindest einige der Gewichte quantisierte Gewichte sind, wobei die quantisierten Gewichte nur Werte innerhalb eines Codebuchs mit einer endlichen Anzahl von Einträgen annehmen können;

Mittel zum Auswählen (32) einer Teilmenge der Algorithmen der aktuellen Population auf der Grundlage der Metrik;

Mittel zum Erzeugen (33) einer aktualisierten Population von Algorithmen aus der Teilmenge durch Anwenden zufälliger Störungen auf die trainierbaren Gewichte der Sender- und Empfänger-Neuronalnetze;

Mittel zum Wiederholen des Bewertens, Auswählens und Erzeugens auf der Grundlage der aktualisierten Population, bis eine erste Bedingung erreicht ist; und

Mittel zum Auswählen eines Algorithmus der aktualisierten Population von Algorithmen, wenn die erste Bedingung erreicht worden ist.

2. Vorrichtung nach Anspruch 1, ferner umfassend Mittel zum Erzeugen einer anfänglichen Population von Algorithmen und zum Festlegen der anfänglichen Population als erste Instanz der aktuellen Population.

3. Vorrichtung nach einem der Ansprüche 1 bis 2, wobei die Mittel zum Bewerten (31) einiger oder aller der aktuellen Population von Algorithmen Mittel zum Berechnen einer Fitness der Algorithmen umfassen, wobei die Fitness der Algorithmen unter Verwendung einer Verlustfunktion berechnet wird.

4. Vorrichtung nach einem der Ansprüche 1 bis 3, wobei die Mittel zum Bewerten (31) einiger oder aller der aktuellen Population von Algorithmen Mittel zum Berechnen einer Neuheit der Algorithmen umfassen, wobei die Neuheit der Algorithmen durch Bestimmen eines Abstands zwischen Algorithmen der Population berechnet wird.

5. Vorrichtung nach einem der vorhergehenden Ansprüche, wobei die Mittel zum Auswählen (32) der Teilmenge der Algorithmen der aktuellen Population Mittel zum Auswählen eines oder mehrerer optimaler Algorithmen der Population gemäß der Metrik umfassen.

6. Vorrichtung nach einem der vorhergehenden Ansprüche, wobei die aktualisierte Population von Algorithmen einen Algorithmus umfasst, der von den Mitteln zum Bewerten (31) als die Metrik am meisten erfüllend unter einigen oder allen der aktuellen Population von Algorithmen bewertet wurde.

7. Vorrichtung nach einem der vorhergehenden Ansprüche, wobei die Mittel zum Erzeugen (33) einer aktualisierten Population von Algorithmen aus der Teilmenge das Erzeugen eines oder mehrerer neuer Algorithmen aus der Teilmenge von Algorithmen umfassen.

8. Vorrichtung nach einem der vorhergehenden Ansprüche, wobei die erste Bedingung erfüllt ist, wenn ein leistungsstärkster Algorithmus der aktuellen oder aktualisierten Population von Algorithmen ein vordefiniertes Leistungskriterium gemäß der Metrik erreicht.

9. Vorrichtung nach einem der vorhergehenden Ansprüche, wobei die erste Bedingung eine definierte Anzahl von Iterationen umfasst.

10. Vorrichtung nach einem der vorhergehenden Ansprüche, wobei die Mittel zum Erzeugen (33) einer aktualisierten Population von Algorithmen aus der Teilmenge einen oder mehrere Parameter und/oder eine oder mehrere Strukturen eines oder mehrerer Algorithmen der Teilmenge von Algorithmen der aktuellen Population modifizieren.

11. Computerimplementiertes Verfahren, umfassend:

Bewerten (31) einiger oder aller einer aktuellen Population von Algorithmen gemäß einer Metrik, wobei jeder Algorithmus der Population ein Übertragungssystem implementiert, wobei das Übertragungssystem einen Sender (2), einen Kanal (3) und einen Empfänger (4) umfasst, wobei der Sender (2) einen Senderalgorithmus umfasst, der als ein Sender-Neuronalnetz mit zumindest einigen trainierbaren Gewichten implementiert ist, und der Empfänger (4) einen Empfängeralgorithmus umfasst, der als ein Empfänger-Neuronalnetz mit zumindest einigen trainierbaren Gewichten implementiert ist, wobei zumindest einige der Gewichte quantisierte Gewichte sind, wobei die quantisierten Gewichte nur Werte innerhalb eines Codebuchs mit einer endlichen Anzahl von Einträgen annehmen können;
Auswählen (32) einer Teilmenge der Algorithmen der aktuellen Population auf der Grundlage der Metrik;
Erzeugen (33) einer aktualisierten Population von Algorithmen aus der Teilmenge durch Anwenden zufälliger Störungen auf die trainierbaren Gewichte der Sender- und Empfänger-Neuronalnetze;
Wiederholen des Bewertens, Auswählens und Erzeugens auf der Grundlage der aktualisierten Population, bis eine erste Bedingung erreicht ist; und
Auswählen eines Algorithmus der aktualisierten Population von Algorithmen, wenn die erste Bedingung erreicht worden ist.

12. Computerlesbares Medium, umfassend darauf gespeicherte Programmanweisungen zum Ausführen zumindest der folgenden Schritte:

Bewerten (31) einiger oder aller einer aktuellen Population von Algorithmen gemäß einer Metrik, wobei jeder Algorithmus der Population ein Übertragungssystem implementiert, wobei das Übertragungssystem einen Sender (2), einen Kanal (3) und einen Empfänger (4) umfasst, wobei der Sender (2) einen Senderalgorithmus umfasst, der als ein Sender-Neuronalnetz mit zumindest einigen trainierbaren Gewichten implementiert ist, und der Empfänger (4) einen Empfängeralgorithmus umfasst, der als ein Empfänger-Neuronalnetz mit zumindest einigen trainierbaren Gewichten implementiert ist, wobei zumindest einige der Gewichte quantisierte Gewichte sind, wobei die quantisierten Gewichte nur Werte innerhalb eines Codebuchs mit einer endlichen Anzahl von Einträgen annehmen können;
Auswählen (32) einer Teilmenge der Algorithmen der aktuellen Population auf der Grundlage der Metrik;
Erzeugen (33) einer aktualisierten Population von Algorithmen aus der Teilmenge durch Anwenden zufälliger Störungen auf die trainierbaren Gewichte der Sender- und Empfänger-Neuronalnetze;
Wiederholen des Bewertens, Auswählens und Erzeugens auf der Grundlage der aktualisierten Population, bis eine erste Bedingung erreicht ist; und
Auswählen eines Algorithmus der aktualisierten Population von Algorithmen, wenn die erste Bedingung erreicht worden ist.

**Revendications**

1. Appareil comprenant :

des moyens d'évaluation (31) de tout ou partie d'une population courante d'algorithmes selon une métrique, chaque algorithme de la population mettant en œuvre un système de transmission, dans lequel le système de transmission comprend un émetteur (2), un canal (3) et un récepteur (4), dans lequel l'émetteur (2) comprend un algorithme d'émetteur mis en œuvre sous forme d'un réseau de neurones d'émetteur comportant au moins certains poids entraînables et le récepteur (4) comprend un algorithme de récepteur mis en œuvre sous forme d'un réseau de neurones de récepteur comportant au moins certains poids entraînables, dans lequel au moins certains des poids sont des poids quantifiés, lesdits poids quantifiés ne pouvant prendre que des valeurs au sein d'un livre de codes ayant un nombre fini d'entrées ;
des moyens de sélection (32) d'un sous-ensemble des algorithmes de la population courante sur la base de la métrique ;
des moyens de génération (33) d'une population mise à jour d'algorithmes à partir dudit sous-ensemble par application de perturbations aléatoires aux poids entraînables des réseaux de neurones d'émetteur et de récepteur ;
des moyens de répétition de l'évaluation, de la sélection et de la génération, sur la base de la population mise à jour, jusqu'à ce qu'une première condition soit atteinte ; et
des moyens de sélection d'un algorithme de ladite population mise à jour d'algorithmes, lorsque ladite première condition a été atteinte.

2. Appareil selon la revendication 1, comprenant en outre des moyens de génération d'une population initiale d'algorithmes et de définition de ladite population initiale comme première instance de ladite population courante.

3. Appareil selon l'une quelconque des revendications 1 à 2, dans lequel les moyens d'évaluation (31) de tout ou partie de la population courante d'algorithmes comprennent des moyens de calcul d'une aptitude desdits algorithmes, l'aptitude desdits algorithmes étant calculée au moyen d'une fonction de perte.

4. Appareil selon l'une quelconque des revendications 1 à 3, dans lequel les moyens d'évaluation (31) de tout ou partie de la population courante d'algorithmes comprennent des moyens de calcul d'une nouveauté desdits algorithmes, la nouveauté desdits algorithmes étant calculée par détermination d'une distance entre algorithmes de la population.

5. Appareil selon l'une quelconque des revendications précédentes, dans lequel les moyens de sélection (32) du sous-ensemble des algorithmes de la population courante comprennent des moyens de sélection d'un ou plusieurs algorithmes optimaux de la population selon ladite métrique.

6. Appareil selon l'une quelconque des revendications précédentes, dans lequel la population mise à jour d'algorithmes comprend un algorithme évalué par les moyens d'évaluation (31) comme satisfaisant le plus ladite métrique parmi tout ou partie de la population courante d'algorithmes.

7. Appareil selon l'une quelconque des revendications précédentes, dans lequel les moyens de génération (33) d'une population mise à jour d'algorithmes à partir dudit sous-ensemble comprennent la génération d'un ou plusieurs nouveaux algorithmes à partir du sous-ensemble d'algorithmes.

8. Appareil selon l'une quelconque des revendications précédentes, dans lequel la première condition est satisfaite lorsqu'un algorithme le plus performant parmi ladite population courante ou mise à jour d'algorithmes atteint un critère de performance prédéfini selon ladite métrique.

9. Appareil selon l'une quelconque des revendications précédentes, dans lequel la première condition comprend un nombre défini d'itérations.

10. Appareil selon l'une quelconque des revendications précédentes, dans lequel lesdits moyens de génération (33) d'une population mise à jour d'algorithmes à partir dudit sous-ensemble modifient un ou plusieurs paramètres et/ou une ou plusieurs structures d'un ou plusieurs algorithmes dudit sous-ensemble d'algorithmes de ladite population courante.

11. Procédé mis en œuvre par ordinateur comprenant :

l'évaluation (31) de tout ou partie d'une population courante d'algorithmes selon une métrique, chaque algorithme de la population mettant en œuvre un système de transmission, dans lequel le système de transmission comprend un émetteur (2), un canal (3) et un récepteur (4), dans lequel l'émetteur (2) comprend un algorithme d'émetteur mis en œuvre sous forme d'un réseau de neurones d'émetteur comportant au moins certains poids entraînables et le récepteur (4) comprend un algorithme de récepteur mis en œuvre sous forme d'un réseau de neurones de récepteur comportant au moins certains poids entraînables, dans lequel au moins certains des poids sont des poids quantifiés, lesdits poids quantifiés ne pouvant prendre que des valeurs au sein d'un livre de codes ayant un nombre fini d'entrées ;
la sélection (32) d'un sous-ensemble des algorithmes de la population courante sur la base de la métrique ;
la génération (33) d'une population mise à jour d'algorithmes à partir dudit sous-ensemble par application de perturbations aléatoires aux poids entraînables des réseaux de neurones d'émetteur et de récepteur ;
la répétition de l'évaluation, de la sélection et de la génération, sur la base de la population mise à jour, jusqu'à ce qu'une première condition soit atteinte ; et
la sélection d'un algorithme de ladite population mise à jour d'algorithmes, lorsque ladite première condition a été atteinte.

**12.** Support lisible par ordinateur comprenant des instructions de programme stockées sur celui-ci pour exécuter au moins les opérations suivantes :

l'évaluation (31) de tout ou partie d'une population courante d'algorithmes selon une métrique, chaque algorithme de la population mettant en œuvre un système de transmission, dans lequel le système de transmission comprend un émetteur (2), un canal (3) et un récepteur (4), dans lequel l'émetteur (2) comprend un algorithme d'émetteur mis en œuvre sous forme d'un réseau de neurones d'émetteur comportant au moins certains poids entraînables et le récepteur (4) comprend un algorithme de récepteur mis en œuvre sous forme d'un réseau de neurones de récepteur comportant au moins certains poids entraînables, dans lequel au moins certains des poids sont des poids quantifiés, lesdits poids quantifiés ne pouvant prendre que des valeurs au sein d'un livre de codes ayant un nombre fini d'entrées ;
la sélection (32) d'un sous-ensemble des algorithmes de la population courante sur la base de la métrique ;
la génération (33) d'une population mise à jour d'algorithmes à partir dudit sous-ensemble par application de perturbations aléatoires aux poids entraînables des réseaux de neurones d'émetteur et de récepteur ;
la répétition de l'évaluation, de la sélection et de la génération, sur la base de la population mise à jour, jusqu'à ce qu'une première condition soit atteinte ; et
la sélection d'un algorithme de ladite population mise à jour d'algorithmes, lorsque ladite première condition a été atteinte.

**Fig. 1**

**Fig. 2**

Fig. 3

Fig. 4

Compute novelty

51

Select subset
according to novelty

52

Generate new
population

53

*Fig. 5*

50

114

110

Memory

RAM

124

126
125

122

ROM

Network
Interface

118

Processor

112

Hardware
Keys

Display

128

120

*Fig. 6*

165

167

166

*FIG. 7A*

168

*FIG. 7B*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DÖRNER et al.** *Deep Learning-based Communication Over the Air*, 11 July 2017
- **LANDER et al.** *EvoAE - A New Evolutionary Method for Training Autoencoders for Deep Learning Networks*, 01 July 2015
- **O'SHEA et al.** *An Introduction to Deep Learning for the Physical Layer*, 01 December 2017